(19) Europäisches Patentamt
European Patent Office
Office européen des brevets

(11) Veröffentlichungsnummer : **0 059 262**
**B1**

(12) # EUROPÄISCHE PATENTSCHRIFT

(45) Veröffentlichungstag der Patentschrift : **13.06.84**

(51) Int. Cl.³ : **C 08 F 2/26**, C 08 F 2/24

(21) Anmeldenummer : **81109844.1**

(22) Anmeldetag : **24.11.81**

(54) **Verfahren zur Herstellung eines vollständig löslichen Emulsionspolymerisats.**

(30) Priorität : **21.02.81 DE 3106502**

(43) Veröffentlichungstag der Anmeldung : **08.09.82 Patentblatt 82/36**

(45) Bekanntmachung des Hinweises auf die Patenterteilung : **13.06.84 Patentblatt 84/24**

(84) Benannte Vertragsstaaten : **CH DE FR GB IT LI NL**

(56) Entgegenhaltungen :
**CH-A- 347 355**
**DE-A- 1 806 998**
**DE-A- 2 218 219**
**GB-A- 976 086**

(73) Patentinhaber : **Röhm GmbH**
**Kirschenallee Postfach 4242**
**D-6100 Darmstadt 1 (DE)**

(72) Erfinder : **Fink, Herbert, Dr.**
**Berliner Strasse 24**
**D-6101 Bickenbach (DE)**
Erfinder : **Siol, Werner, Dr.**
**Mühlbergstrasse 4**
**D-6102 Pfungstadt (DE)**
Erfinder : **Dinklage, Horst**
**Am Schlangensee 93**
**D-6110 Dieburg (DE)**
Erfinder : **Rauch, Hubert**
**Odenwaldstrasse 6**
**D-6108 Weiterstadt 1 (DE)**

**EP 0 059 262 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung bezieht sich auf ein Verfahren gemäß dem Oberbegriff des Hauptanspruches zur Herstellung eines vollständig löslichen Emulsionspolymerisats, das vollständig klare Lösungen in organischen Lösungsmitteln ergibt, welche zu klaren und wenig wasserempfindlichen Filmen auftrocknen.

Die aus üblichen Kunststoffdispersionen erzeugten Filme sind wasserempfindlich, was auf den Gehalt an wasserlöslichen Emulgiermitteln zurückzuführen ist. Wenn man den Kunststoff, beispielsweise durch Sprühtrocknung, von der wäßrigen Phase der Dispersion trennt und in einem organischen Lösungsmittel löst, so sind die aus der Lösung herstellbaren Filme infolge des Emulgatorgehalts ebenfalls wasserempfindlich. Die üblichen Kunststoffdispersionen enthalten Emulgiermittel in Form von Alkalisalzen, die beim Eintrocknen des Überzugsfilms unverändert bleiben. Aus der US-PS 3 847 855 ist ein Verfahren zur Herstellung von wäßrigen Kunststoffdispersionen bekannt, die beim Auftrocknen Filme von verminderter Wasserempfindlichkeit ergeben. Die bei diesem Verfahren verwendeten Emulgiermittel liegen in Form von Ammoniumsalzen vor. Beim Eintrocknen des Films und gegebenenfalls Erwärmen spaltet sich aus dem Ammoniumsalz Ammoniak ab und entweicht in die Atmosphäre. Die zurückbleibende freie Emulgatorsäure ist weniger hydrophil als das ursprünglich eingesetzte Ammoniumsalz und führt infolgedessen zu einer geringeren Wasserempfindlichkeit des Films. Darüber hinaus ist die radikalische Polymerisation in Gegenwart von Ammoniak oder Aminen vor allem bei Polymerisation von Acrylsäurederivaten problematisch, da es im allgemeinen zur Addition des Ammoniaks an die Doppelbindung der Acrylate kommt. Die dabei gebildeten primären, sekundären oder tertiären Amine sind wesentlich schwerer flüchtig als Ammoniak selbst, so daß diese Basen zum großen Teil im Polymerisat verbleiben und eine gewisse Wasserempfindlichkeit und besonders eine deutliche Vergilbungstendenz verursachen.

Ebenfalls zur Verminderung der Wasserempfindlichkeit werden auch beim Verfahren der US-PS 2 680 111 Ammoniumsalze von Emulgatorsäuren bei der Emulsionspolymerisation eingesetzt. Bei diesem Verfahren werden Diene zusammen mit Styrol in Gegenwart eines Initiatorsystems, das aus einem organischen Hydroperoxid und einem Polyamin besteht, zu einem Latex polymerisiert, aus dem sich ein Synthesekautschuk mit verminderter Wasserempfindlichkeit herstellen läßt.

Gemäß der DE-PS 1 119 513 wird Pasten-PVC durch Emulsions-Polymerisation von Vinylchlorid in Gegenwart eines öllöslichen Natriumsalzes eines Sulfobernsteinsäureesters hergestellt. Das Emulsionspolymerisat wird durch Sprühtrocknung in Pulverform gewonnen.

Die Emulsionspolymerisate, die aus den oben beschriebenen Dispersionen, beispielsweise durch Sprühtrocknung in Pulverform erhalten worden sind, ergeben auch in guten organischen Lösungsmitteln keine vollständig klaren Lösungen. Beim Auftrocknen von Überzügen entstehen je nach der Dicke mehr oder weniger getrübte Filme. Als besonders nachteilig wird die Eigenschaft dieser Filme angesehen, bei Berührung mit Wasser weiß anzulaufen. Diese Eigenschaft wird auf die Hydrophilie des in dem Überzugsfilm enthaltenen Emulgatorsalzes zurückgeführt. Dieser Nachteil tritt auch dann auf, wenn Ammoniumsalze von Emulgatorsäuren in den zugrundeliegenden Kunststoffdispersionen enthalten waren, woraus zu folgern ist, daß beim Eintrocknen des Films das Ammoniak aus dem Ammoniumsalz der Emulgatorsäure nur unvollständig abgespalten wird.

Nach der GB-PS 811 693 werden als Emulgatoren für die Emulsionspolymerisation Umsetzungsprodukte aus einem Acrylmonomeren, Schwefeldioxid und einem organischen Peroxid eingesetzt. Da die dabei gebildeten freien Emulgatorsäuren öllöslich, aber wenig oder gar nicht wasserlöslich sind, werden bei der Emulsionspolymerisation vorwiegend ihre wasserlöslichen Alkalisalze verwendet. Darüber hinaus wird zur Dispersionsherstellung stets das in Öl nicht lösliche Kaliumpersulfat als Initiator verwendet.

Auch nach dem Verfahren der CH-PS 347 355 wird die Verwendung von bestimmten Äthercarbonsäuren in Form freier Emulgatorsäuren bei der Emulsionspolymerisation in Betracht gezogen. Tatsächlich werden jedoch in allen Fällen die Alkali- oder Ammoniumsalze der Emulgatorsäuren eingesetzt.

Auch die im Sinne dieser Patentschriften mit freien Emulgatorsäuren hergestellten Dispersionen ergeben keine völlig klaren Lösungen. Die daraus hergestellten Filme laufen bei Berührung mit Wasser weiß an.

Der Erfindung liegt die Aufgabe zugrunde, vollständig lösliche Emulsionspolymerisate nach einem technisch gebräuchlichen Emulsionspolymerisationsverfahren herzustellen. Die Emulsionspolymerisate sollen klare Lösungen und diese Lösungen wiederum klare Filme ergeben, die bei Berührung mit Wasser nicht weiß anlaufen. Es wurde gefunden, daß die Aufgabe durch das Verfahren gemäß Hauptanspruch gelöst wird.

Die Erfindung trägt der Erkenntnis Rechnung, daß Emulgiermittel in Form von Alkalisalzen die aus den damit hergestellten Emulsionspolymerisaten erzeugten Filme wasserempfindlich machen. Da Ammoniumsalze von Emulgatorsäuren zwar eine gewisse, aber nicht ausreichende Verminderung der Wasserempfindlichkeit herbeiführen, werden auch die Ammoniumsalze erfindungsgemäß vermieden und nur noch die freien Emulgatorsäuren eingesetzt. Aber selbst damit werden völlig klare Lösungen und Filme und eine ausreichend niedrige Wasserempfindlichkeit nicht erreicht, solange bei der Herstellung der Emulsionspolymerisate salzartige, in organischen Lösungsmitteln unlösliche radikalische Initiatoren

verwendet werden. Insbesondere die bei der Emulsionspolymerisation gebräuchlichen Persulfatinitiatoren hinterlassen beim radikalischen Zerfall und nach anschließenden Übertragungsreaktionen die entsprechenden Sulfate. Sie sind bei der Abtrennung des Emulsionspolymerisats von der wäßrigen Phase praktisch nicht zu entfernen und verbleiben in dem Emulsionspolymerisat. Beim Auflösen des Polymerisats in einem organischen Lösungsmittel bleiben diese Salze ungelöst und verursachen eine Trübung, die auch beim Eintrocknen der Lösung zu einem Überzugsfilm nicht mehr verschwindet. Bei der Berührung des Films mit Wasser nehmen die Salzkristalle durch Diffusion Wasser auf und gehen in Lösung. Die eingelagerten Lösungströpfchen machen sich durch Weißanlaufen des Films bemerkbar.

In der älteren deutschen Patentanmeldung P 30 35 375.4 (EP 48 320) ist schon ein Verfahren der Emulsionspolymerisation mit einem in organischen Lösungsmitteln löslichen, nicht salzartigen Initiator und von 2-N-Acrylamido-2-tetra-decansulfonsäure als Emulgator vorgeschlagen worden. Die Verwendung dieses Emulgiermittels bleibt bei der vorliegenden Erfindung ausgenommen.

Als Emulgiermittel für das Verfahren der Erfindung eignen sich solche freien Emulgatorsäuren, die in Wasser wenigstens in einer emulgierwirksamen Konzentration löslich sind und zu einem erheblichen Teil in dissoziierter Form vorliegen. Der $pK_a$-Wert beträgt vorzugsweise höchstens 4,5. Höhere Fettsäuren und andere organische Carbonsäuren mit hydrophoben Resten erfüllen diese Forderungen im allgemeinen nicht und sind im Regelfall nicht als Emulgiermittel geeignet. Die bevorzugten Emulgatorsäuren sind organische Sulfonsäuren und organische Phosphorsäuren sowie die Monoester oder Diester der Phosphorsäure mit hydrophoben organischen Hydroxyverbindungen. Diese Hydroxyverbindungen sind z. B. Phenole, Alkylphenole, Fettalkohole oder Oxäthylierungsprodukte dieser Hydroxyverbindungen oder von anderen Verbindungen mit einem aktiven Wasserstoffatom, wie z. B. Fettsäuren oder Fettsäureamiden.

Beispiele geeigneter Emulgatorsäuren sind Perfluoralkancarbonsäuren, wie Perfluordekansäure, freie Säuren der Sarcoside, wie Lauroylsarcosin, Alkylsulfamidoessigsäuren, wie Decylsulfamidoessigsäure, Sulfonsäuren, wie Dodecylbenzolsulfonsäure, Tetradecylsulfonsäure oder Cumolsulfonsäure, freie Säuren von komplexen Phosphatestern, wie Gemische aus primären und sekundären Estern von gegebenenfalls oxäthylierten Alkanolen oder Alkylphenolen. In der Regel sind es Gemische von Produkten der Formeln:

$$RO(C_2H_4O)_n\text{-}PO_3H_2$$

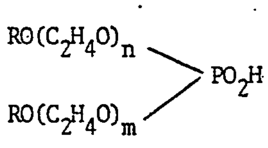

wobei R größere aliphatische oder aromatische Reste und n und m Zahlen im Bereich von 0 bis 20 sind. Typische Emulgatorsäuren dieser Art sind phosphatierte Anlagerungsprodukte von z. B. 5 Mol Äthylenoxid an 1 Mol Isononylphenol.

Neben den freien Emulgatorsäuren können nichtionische Emulgiermittel mitverwendet werden, die in der Emulsionspolymerisation gebräuchlich sind. Sie müssen ebenso wie die freien Emulgatorsäuren sowohl in Wasser als auch in organischen Lösungsmitteln hinreichend löslich sein. Als Beispiele seien Oxäthylierungsprodukte von Alkylphenolen, Fettsäuren und Fettamiden genannt. Die Oxäthylierungsgrade können im Bereich von 5 bis 30 liegen.

Die Menge der freien Emulgatorsäuren und gegebenenfalls der nichtionischen Emulgiermittel richtet sich nach deren Wirksamkeit und den gewünschten Eigenschaften der Dispersion. Die freie Emulgatorsäure wird im allgemeinen in einer Menge von 0,01 bis 2 % und vorzugsweise in einer Menge von 0,05 bis 1 % eingesetzt. Nichtionische Emulgiermittel können in einer Menge bis zu etwa 2 % eingesetzt werden. Diese Mengenangaben beziehen sich in allen Fällen auf das Gewicht der wäßrigen Phase der Dispersion.

Die Eigenschaften des Emulsionspolymerisats werden durch die Art der Zugabe der freien Emulgatorsäure in der gleichen Weise wie mit anderen anionischen Emulgiermitteln beeinflußt. Wenn die Emulgiermittel zu Beginn der Polymerisation in einer hohen Konzentration eingesetzt werden, entstehen sehr feine Latexteilchen. Wird dagegen die freie Emulgatorsäure zu Beginn der Polymerisation nahe bei oder etwas unterhalb der kritischen Mizellbildungskonzentration eingesetzt und weitere Emulgatorsäure und gegebenenfalls nichtionisches Emulgiermittel während oder nach der Polymerisation zugegeben, so entstehen größere Latexteilchen.

Die Polymerisation wird vorzugsweise bei dem pH-Wert durchgeführt, der sich durch den Einsatz der freien Emulgatorsäure von selbst ergibt. Keinesfalls soll der pH-Wert durch Zugabe von Basen verändert werden, weil dann Salzbildung mit den Emulgatorsäuren eintritt und die unerwünschten Folgen eines Salzgehaltes in dem Emulsionspolymerisat herbeigeführt werden. Der pH-Wert kann jedoch etwas unterhalb des Wertes liegen, der sich durch die freie Emulgatorsäure selbst einstellt. Diese Verschiebung kann z. B. auf die Mitverwendung von polymerisierbaren Carbonsäuren in dem zu polymerisierenden Monomerengemisch zurückzuführen sein. Eine zu starke Erniedrigung des pH-Wertes kann allerdings

den Dissoziationsgrad der freien Emulgatorsäure zurückdrängen, wodurch ihre Emulgierwirksamkeit beeinträchtigt würde.

Beim Verfahren der Erfindung sind die bei der Emulsionspolymerisation überwiegend verwendeten salzartigen wasserlöslichen und in organischen Lösungsmitteln unlöslichen Initiatoren, insbesondere Persulfate, ungeeignet. Die erfindungsgemäß zu verwendenden Initiatoren und ebenso die beim radikalischen Zerfall und gegebenenfalls bei Übertragungsreaktionen entstehenden Zerfallsprodukte müssen in organischen Lösungsmitteln löslich sein. Es genügt eine Löslichkeit von mindestens etwa 0,1 Gew.-% bei 20 °C in einem Lösungsmittel aus der Gruppe Methylethylketon, Essigsäureäthylester, Essigsäurebutylester, Methylisobutylketon, Benzin, Tetrahydrofuran, Cyclohexanon, Toluol, Xylol, Trichloräthylen. Andererseits müssen die Initiatoren, um die Emulsionspolymerisation zu ermöglichen, auch in Wasser wenigstens bei der Polymerisationstemperatur in einer zur Polymerisationsauslösung ausreichenden Konzentration löslich sein. Im allgemeinen genügt eine Wasserlöslichkeit von 0,1 % bei 80 °C. Beispiele von Initiatoren, die diese Forderungen erfüllen, sind organisch lösliche Peroxide, wie Dibenzoylperoxid, Dibutyroylperoxid, Cumolhydroperoxid, sowie organisch lösliche Redox-Systeme aus Peroxiden und Merkaptanen, Azo-Verbindungen, wie Azo-bis-isobuttersäurenitril oder 4,4'-Azo-bis-4-cyanovaleriansäure. Weiterhin geeignet ist Wasserstoffperoxid, das keine in organischen Lösungsmitteln unlöslichen Zerfallsprodukte hinterläßt. Der Initiator wird in einer Menge von etwa 0,1-1 Gew.%, bezogen auf die wäßrige Phase, in einem oder mehreren Anteilen zugesetzt. Die Polymerisationstemperatur richtet sich nach der Zerfallstemperatur des Initiators und liegt im allgemeinen zwischen 50 und 100 °C.

Zu den erfindungsgemäß zu polymerisierenden Verbindungen gehören alle wasserunlöslichen, radikalisch polymerisierbaren Monomeren oder die überwiegend aus solchen Monomeren bestehenden Monomerengemische, aus denen üblicherweise Emulsionspolymerisate erzeugt werden. Bevorzugte wasserunlösliche Monomere sind die Ester der Acryl- und Methacrylsäure mit 1 bis 8 C-Atomen im Alkoholrest. Weiterhin sind Styrol und seine Homologen, wie Vinyltoluol oder α-Methyl-Styrol, wichtige Monomere für das Verfahren der Erfindung. Als weitere Monomere sind Acrylnitril und Methacrylnitril, Vinylester, wie Vinylacetat oder -propionat, Diene und Olefine zu nennen. Zu den Monomeren, die in der Regel in untergeordneten Mengen in dem Monomerengemisch enthalten sein können, gehören Hydroxyester von ungesättigten Carbonsäuren, Acryl- und Methacrylamid sowie deren Methylolverbindungen und Methyloläther, ungesättigte Carbonsäuren, insbesondere Acryl- und Methacrylsäure.

Die Monomeren werden, wie üblich, in der wäßrigen Phase, die den Emulgator und den Initiator enthält, emulgiert und nach Erwärmen auf die Polymerisationstemperatur polymerisiert. Vorzugsweise läßt man die Monomeren allmählich nach Maßgabe der Polymerisation in das Polymerisationsgefäß einlaufen. Besonders bevorzugt ist die Zugabe der Monomeren in Form einer wäßrigen Emulsion in einem Teil der Wasserphase. Üblicherweise stellt man Dispersionen mit einem Feststoffgehalt zwischen 20 und 60 Gew.-% her.

Es versteht sich, daß keine Monomeren mitverwendet werden dürfen, die die klare Löslichkeit des Emulsionspolymerisats in organischen Lösungsmitteln beeinträchtigen würden. Salzartige Monomere, wie z. B. Natriumacrylat oder -methacrylat, sowie basische Monomere, wie Aminoalkylester ungesättigter Carbonsäure, können nicht mitverwendet werden, da sie mit den freien Emulgatorsäuren Salze bilden könnten. Auch mehrfach ungesättigte Monomere sind nicht geeignet, weil sie zu vernetzten und unlöslichen Polymerisaten führen. Bei der Verwendung von vernetzungsfähigen Monomeren, wie Methylolamiden der Acryl- oder Methacrylsäure, ist darauf zu achten, daß nicht eine vorzeitige Vernetzung eintritt.

Aus der wäßrigen Dispersion kann das Emulsionspolymerisat durch an sich bekannte Verfahren gewonnen werden. Die Gewinnung des Polymerisats in Pulverform setzt voraus, daß die Glastemperatur des Polymerisats oberhalb 20 °C, insbesondere im Bereich zwischen 30 und 160 °C liegt, was in an sich bekannter Weise durch die Auswahl der polymerisierten Monomeren festgelegt wird. Im Interesse einer leichten Löslichkeit des Polymerisats werden Gewinnungsmethoden bevorzugt, bei denen die Latexteilchen in möglichst geringem Maße zu größeren Aggregaten zusammenklumpen. Geeignet ist z. B. das Verfahren der Gefriertrocknung oder der Sprühtrocknung, insbesondere wenn bei dem letzteren Temperaturen oberhalb der Glastemperatur des Emulsionspolymerisats vermieden werden. Das erhaltene feinteilige Polymerisatpulver läßt sich in wenigen Minuten in organischen Lösungsmitteln zu vollständig klaren Lösungen auflösen. Aus den Lösungen hergestellte Überzugsfilme sind vollständig klar und werden auch bei Wasserlagerung nicht trüb. Die Polymerisatpulver lassen sich auch mit anderen glasklaren Kunststoffen, beispielsweise Hart-PVC, zu Mischungen von unveränderter Klarheit verarbeiten. Die Pulver sind daher als Verarbeitungshilfsmittel oder als Zusätze zur Verbesserung der Schlagzähigkeit von PVC und anderen Kunststoffen gut geeignet.

## Beispiel 1

### Dispersionsherstellung

In einem 4 l-Rundkolben mit Rührwerk wird eine Mischung aus 720 g Wasser, 1 g einer Emulgatorsäure, bestehend aus fünffach oxäthyliertem und phosphatiertem Isononylphenol [$i\text{-}C_9H_{19}\text{-}C_6H_4\text{-}O(C_2H_4O)_5\text{-}PO_3H_2$] und 0,5 g Azo-bis-isobutyronitril vorgelegt und unter kräftigem Rühren auf 80 °C

erwärmt.

In diese Vorlage läßt man bei langsamer Rührung innerhalb von 4 Stunden bei 80 °C eine Emulsion eintropfen, bestehend aus :

1 200 g Methylmethacrylat
1 g 2-Äthylhexylthioglykolat
3,5 g der oben genannten Emulgatorsäure
3,0 g Azo-bis-isobutyronitril
1 100 g Wasser.

Nach Beeindigung des Zulaufs hält man noch weitere 90 min auf 80 °C, kühlt ab, filtriert bei Raumtemperatur und erhält so eine niedrigviskose, gut handhabbare Dispersion mit einem Feststoffgehalt von 39 Gew.-%.

Die Dispersion wird anschließend durch Sprühtrocknung vom Wasser befreit. Es resultiert ein weißes, nicht verglastes Pulver mit einer Restfeuchte unter 1 %.

Lösungsverhalten

Durch Einrühren von 20 g des sprühgetrockneten Pulvers in 180 g einer Mischung aus Essigester und Methyläthylketon (1 : 1) erhält man innerhalb von 3 min eine völlig klare Lösung mit einem Trockengehalt von 10 Gew.-%.

Filmqualität

Aus der oben beschriebenen 10 %igen Lösung wird ein Film von 100 μm Schichtdicke auf eine Unterlage aufgetragen und getrocknet. Der Film ist völlig klar und zeigt auch nach 24 Stunden Lagerung unter Wasser keine Weißfärbung oder Trübung.

Beispiel 2

In einem Polymerisationsgefäß wie in Beispiel 1 werden

1,4 g eines technischen Alkylphenol-Aethylenoxidaddukts, das phosphatiert ist, Säurezahl des ersten Umwandlungsprodukts 49-59, des zweiten Umwandlungsprodukts 85-100, pH-Wert der 10 Gew.-%igen wäßrigen Lösung < 2,5
20,0 g Perhydrol (30 %iges $H_2O_2$) und
1 400 g Wasser

vorgelegt. Man erwärmt die Vorlage auf 80 °C und läßt bei dieser Temperatur innerhalb von 4 Stunden eine Lösung von 1,4 g der oben genannten Emulgatorsäure und 600 g Methylmethacrylat zutropfen.

Anschließend wird 3 Stunden bei 80 °C belassen, danach abgekühlt und filtriert. Aus der 28 gewichtsprozentigen niedrigviskosen Dispersion vom pH 3 erhält man durch Sprühtrocknung ein weißes nicht verglastes Pulver vom Schüttgewicht : 300 g/l. Es ist in Essigester/Methyläthylketon klar löslich.

Beispiel 3

Man verfährt wie in den Beispielen 1 und 2
Vorlage :

12 g Perhydrol (= 30 %ige Lösung von $H_2O_2$)
1,5 g Dodecylbenzolsulfonsäure
1 400 g Wasser.

Zu dieser Vorlage dosiert man innerhalb von 4 Stunden bei 85 °C eine Lösung aus :

0,4 g 2-Äthylhexylthioglykolat
5,0 g Dodecylbenzolsulfonsäure
4,0 g Azo-bis-isobutyronitril
180,0 g Isobutylmethacrylat
420,0 g Methylmethacrylat

Nach Polymerisationsende wird weitere 2 Stunden bei 80 °C belassen, danach abgekühlt und filtriert. Es entsteht eine 28 %ige Dispersion vom pH 2,1, aus der man durch Sprühtrocknung ein weißes, nicht verglastes Pulver vom Schüttgewicht = ca. 350 g/l erhält.

Es ist in Essigester/Methyläthylketon klar löslich.

Beispiel 4 (Vergleichsversuch)

Man verfährt wie in Beispiel 2
Vorlage :

2,0 g Tetradecylsulfonsäure, Natriumsalz
20,0 g Perhydrol (= 30 %iges $H_2O_2$)
1 400,0 g Wasser

Zulauf :

600,0 g Methylmethacrylat

Nach 4 Stunden Zulauf bei 80 °C und 3 Stunden Nacherhitzen bei 80 °C wird abgekühlt und filtriert. Man erhält eine niedrigviskose Dispersion mit einem Feststoffgehalt von 28 Gew.-%, die durch Versprühen getrocknet wird.

Eigenschaften der Lösung in organischem Lösungsmittel bzw. der aus diesen Lösungen hergestellten Filme siehe Tabelle.

Beispiel 5 (Vergleichsversuch)

In einem Polymerisationsgefäß gemäß Beispiel 1 wird eine Lösung von

0,1 g Tetradecylsulfonsäure, Natrium-Salz
0,3 g Ammoniumpersulfat in
400,0 g vollentsalztem Wasser

vorgelegt. Dazu läßt man bei 80 °C eine Emulsion, hergestellt aus

2,0 g Tetradecylsulfonsäure, Natrium-Salz
1,3 g Ammoniumpersulfat
1 000,0 g Methylmethacrylat
600,0 g vollentsalztem Wasser

innerhalb 4 Stunden zutropfen. Danach wird 2 Stunden auf 80 °C erhitzt. Nach Abkühlen und Filtrieren erhält man eine Dispersion mit einem Feststoffgehalt von 49 Gew.-%, pH-Wert 2,6, die durch Sprühtrocknung in ein weißes, nicht verglastes Pulver übergeführt wird.

Lösungseigenschaften dieses Pulvers bzw. der daraus hergestellten Lacke siehe Tabelle.

(Siehe Tabelle Seite 7 f.)

Tabelle : Lösungseigenschaften sprühgetrockneter Polymethylmethacrylatpulver

| Beisp. Nr. | Initiator | Emulgator | Lösungsgeschwindigkeit ***) (12% in EE/MEK = 1/1) | Aussehen der Lösung | Aussehen des Films nach 24 h Wasserlagerung |
|---|---|---|---|---|---|
| 1 | AIBN*) | Isononylphenol, oxäthylyliert phosphatiert, Säureform | < 5 min | klar | klar |
| 2 | $H_2O_2$ | freie Säure eines komplexen org. Phosphatesters | < 5 min | klar | klar |
| 4 | $H_2O_2$ | Tetradecylsulfonsäure, Natriumsalz | < 5 min | durchscheinend, trüb | trüb |
| 5 | APS**) | Tetradecylsulfonsäure, Natriumsalz | < 5 min | trüb | trüb |

*) Azo-bis-isobutyronitril
**) Ammoniumpersulfat
***) Lösung im Schnellrührer
EE/MEK = Gemisch Essigester und Methyläthylketon 1 : 1

Beispiel 6

In einem Polymerisationsgefäß wie in Beispiel 1 werden 0,7 g einer Emulgatorsäure, bestehend aus einem fünffach oxäthylierten und phosphatierten Isononylphenol [i-$C_9H_{19}$-$C_6H_4$-O-($C_2H_4O)_5$-$PO_3H_2$], 10 g Perhydrol (= 30 %iges $H_2O_2$) und 1 400 g vollentsalztes Wasser vorgelegt.

Man erwärmt die Vorlage auf 85 °C und läßt bei dieser Temperatur innerhalb von 4 Stunden eine Lösung zutropfen, bestehend aus :

4,0 g Azo-bis-isobutyronitril
2,0 g der oben beschriebenen Emulgatorsäure
0,2 g 2-Äthylhexylthioglykolat
120,0 g Äthylacrylat
480,0 g Styrol

Danach wird noch 2 Stunden bei 80 °C gerührt, anschließend abgekühlt, filtriert und durch Sprühtrocknung das wasserfreie Polymerisat gewonnen.

Das trockene Produkt besteht aus weißen, nicht verglasten Pulverkörnchen, die sich in Toluol innerhalb von 10 min klar lösen.

**Ansprüche**

1. Verfahren zur Herstellung eines in organischen Lösungsmitteln vollständig löslichen Emulsionspolymerisats durch Emulsionspolymerisation von wasserunlöslichen, radikalisch polymerisierbaren Monomeren oder überwiegend aus solchen Monomeren bestehenden Monomerengemischen in Gegenwart von anionischen Emulgiermitteln und wenigstens begrenzt wasserlöslichen Polymerisationsinitiatoren, dadurch gekennzeichnet, daß als anionisches Emulgiermittel eine in organischen Lösungsmitteln lösliche freie Emulgatorsäure, die in Wasser wenigstens in einer emulgierwirksamen Konzentration löslich ist und zu einem erheblichen Teil in dissoziierter Form vorliegt, ausgenommen 2-N-Acrylamido-2-tetradecansulfonsäure, eingesetzt wird und ein in organischen Lösungsmitteln löslicher, radikalbildender Polymerisationsinitiator, der auch in Wasser wenigstens bei der Polymerisationstemperatur in einer zur Polymerisationsauslösung ausreichenden Konzentration löslich ist, oder Wasserstoffperoxid, verwendet wird.

2. Verfahren nach Anspruch 1, dadurch gekennzeichnet, daß die freie Emulgatorsäure einen $pK_a$-Wert von höchstens 4,5 hat.

3. Verfahren nach den Ansprüchen 1 und 2, dadurch gekennzeichnet, daß das Emulsionspolymerisat durch Sprühtrocknung von der wäßrigen Phase getrennt wird.

**Claims**

1. Process for preparing an emulsion polymer completely soluble in organic solvents by emulsion polymerisation of radically polymerisable monomers insoluble in water or of monomer mixtures consisting predominantly of such monomers, in the presence of anionic emulsifiers and polymerisation initiators soluble in water at least to a limited extent, characterised in that a free emulsifier acid, which is soluble in organic solvents and which is soluble in water at least in a concentration effective in terms of emulsification and is present in a considerable proportion in dissociated form, with the exception of 2-N-acrylamido-2-tetradecanosulphonic acid, is employed as an anionic emulsifier, and a radical-forming polymerisation initiator, which is soluble in organic solvents and which is also soluble in water, at least at the polymerisation temperature, in a concentration sufficient to initiate polymerisation, or hydrogen peroxide is used.

2. Process according to claim 1, characterised in that the free emulsifier acid has a $pK_a$ value of at most 4.5.

3. Process according to claims 1 and 2, characterised in that the emulsion polymer is separated from the aqueous phase by spray-drying.

**Revendications**

1. Procédé de préparation d'un polymère entièrement soluble dans les solvants organiques par polymérisation en émulsion de monomères insolubles dans l'eau, aptes à la polymérisation radicalaire, ou de mélanges de monomères consistant principalement en monomères de ce type, en présence d'agents émulsionnants anioniques et d'inducteurs de polymérisation solubles, au moins en proportions limitées, dans l'eau, caractérisé en ce que l'on utilise en tant qu'agent émulsionnant anionique un acide émulsionnant libre soluble dans les solvants organiques, soluble dans l'eau au moins à une concentration

efficace pour le pouvoir émulsionnant et qui est présent en proportion importante à l'état dissocié, à l'exception de l'acide 2-N-acrylamido-2-tétradécane-sulfonique, et on utilise un inducteur de polymérisation radicalaire soluble dans les solvants organiques et également soluble dans l'eau, au moins à la température de polymérisation, à une concentration suffisante pour déclencher la polymérisation, ou du peroxyde d'hydrogène.

2. Procédé selon la revendication 1, caractérisé en ce que l'acide émulsionnant libre présente une valeur de $pK_a$ de 4,5 au maximum.

3. Procédé selon les revendications 1 et 2, caractérisé en ce que le polymère préparé en émulsion est séparé de la phase aqueuse par atomisation.